# EUROPEAN PATENT SPECIFICATION

(11) **EP 4 479 837 B1**
(45) Date of publication and mention of the grant of the patent: **29.04.2026**
(21) Application number: 23705168.5
(22) Date of filing: 11.01.2023
(51) Int. Cl.: G06F 8/65, G06F 9/455

(54) **USER-INTERFACE-BASED FLEETWIDE AGENT INSTALLATION WITH INTELLIGENT NUDGES**
BENUTZEROBERFLÄCHENBASIERTE FLOTTENWEITE INSTALLATION VON AGENTEN MIT INTELLIGENTEN ANSTÖSSEN
INSTALLATION D'AGENT AU NIVEAU D'UNE FLOTTE BASÉE SUR UNE INTERFACE UTILISATEUR AVEC DES ENCOURAGEMENTS INTELLIGENTS

(30) Priority: 16.02.2022 US 202217673246
(43) Date of publication of application: 25.12.2024
(73) Proprietor: GOOGLE LLC, Mountain View CA 94043 (US)
(72) Inventor: GARON, Haskell, Mountain View, CA 94043 (US); HUANG, Ling, Mountain View, CA 94043 (US); RAFFENSPERGER, David, Mountain View, CA 94043 (US); LIN, Victor, Mountain View, CA 94043 (US)
(74) Representative: Betten & Resch
(86) International application number: PCT/US2023/060474
(87) International publication number: WO 2023/158891

(56) References cited:
- WO-A1-2013/184134
- WO-A1-2020/198600
- US-A1- 2014 047 439
- US-A1- 2019 073 236

## Description

### BACKGROUND

In cloud computing, it is common to install an agent on a virtual machine (VM) in order to collect metrics and logs, and to monitor health of the VM and any applications being run at the VM.

Installing an agent on a VM can be performed through a command-line tool. There are several drawbacks to this approach. First of all, users may not even be aware of the need for the agent to be installed, meaning that monitoring of a problem often begins only after the problem begins to occur. Furthermore, it is not always clear to users which VMs do and do not have agents installed, and whether the VMs are updated to the appropriate version of the desired agent. Furthermore, command-line tools require a certain degree of technical sophistication that not all users possess.

Setting up a third-party automation tool to manage agent installation and updating may address the user's lack of awareness as to whether agents need to be installed or updated, but requires some technical sophistication to set up. Furthermore, the use of third-party tools creates an added layer of reliance, so that the VMs operate correctly only when the third-party tool itself is installed correctly and up-to-date.

US 2019/073236 A1 describes methods and apparatus to automatically configure monitoring of a virtual machine are disclosed. An example apparatus includes a service analyzer to: identify a first virtual machine in a first application definition, the first application definition identifying virtual machines included in a first application, the first virtual machine currently running in the first application; and detect a second virtual machine currently running in the first application, the second virtual machine not included in the first application definition; and a virtual machine analyzer to: generate a second application definition, the second application definition created by adding the second virtual machine to the first application definition; and store the second application definition in an application configuration database.

In WO 2020/198600 A1, techniques for an optimization service of a service provider network to help optimize the selection, configuration, and utilization, of virtual machine (VM) instance types to support workloads on behalf of users. The optimization service may implement the techniques at various stages in a life cycle of a workload. The optimization service may perform techniques to help new users select an optimized VM instance type on which to initially launch their workload. Further, the optimization service may monitor a workload for the life of the workload, and determine new VM instance types, and/or configuration modifications. The optimization service may provide recommendations to users.

US 2014/047439 A1 discloses a method of executing an original agent application as a virtual agent. The method comprises: encapsulating an original agent in a container file to produce a virtual agent; providing the virtual agent to an endpoint machine; and executing the virtual agent, within the container, on the endpoint machine.

WO 2013/184134 A1 disclose a system that includes an application model to characterize a given application for deployment on a cloud. A deployment manager analyzes an application requirement for the given application based on the application model and policies associated with the given application to substantially match infrastructure resources in the cloud to fulfill the application requirement.

### BRIEF SUMMARY

Objects of the present disclosure are achieved by subject matters of the independent claims. Dependent claims define some of possible exemplary embodiments.

The present disclosure provides a method and system for installing and updating agents on VMs without requiring the technical proficiency of command-line tools while also removing the reliance on third-party automation tools. This is accomplished using a policy for controlling a plurality of pre-installed packages included in a VM image. The VM image may be used to create the user's VMs, and may further control one or more policies for managing installation and update of agents on the user's VMs.

### BRIEF DESCRIPTION OF THE DRAWINGS

Fig. 1 is a block diagram of an example system in accordance with an aspect of the present disclosure.
Figs. 2 and 3 are flow diagrams of example routines in accordance with an aspect of the disclosure.
Fig. 4 is an illustration of an example user interface in accordance with an aspect of the disclosure.
Fig. 5 is a diagram illustrating an example asynchronous installation routine in accordance with an aspect of the disclosure.

### DETAILED DESCRIPTION

### Overview

The present disclosure uses installation policies that give instructions to a pre-installed package of a VM image to manage installation and update of agents on the user's VMs. The policies for the pre-installed package may be controlled via a user interface (UI). The UI may initially output a message to a user, and then subsequently transmit a user input received in response to the outputted message. For example, the message may inform the user of the importance of installing an agent for collecting metrics and logs, and requesting the user's permission to install the agent on all existing VMs, or on all existing VMs that do not currently have the agent. In such an example, the user input may be an instruction to install the agent on the VMs. In another example, the message may request the user's permission to create a policy for automatically adding agents to newly created VMs moving forward, or for automatically updating previously added agents to a latest non-breaking version. In such an example, the user input may be an instruction to perform the automatic agent installation or updating.

In some examples, the pre-installed package may be programmed to respond to the user input to install the agent by immediately installing the agent. In other examples, the pre-installed package may be programmed to, in response to the user input, assign a label to those VMs at which the user wishes to install an agent. Once the label is assigned, a secondary program may be utilized to install the agents based on the labels. For instance, the secondary program may run at regular intervals, such as every ten minutes, to check for and install requested agents. The secondary program can install the agents at the same time, or in batches according to the regular intervals.

In some examples, the initial step of outputting the message may be performed at regular intervals of time, or in response to a user action such as creating a new VM. In other examples, the pre-installed package may further include fleet-based rules or benchmarks for determining when to execute the initial step of outputting the message. For example, the rules or benchmarks may predefine a threshold number and output the message to the UI when the number of installed VMs without the agent meets or exceeds the threshold number. For further example, rules or benchmarks may predefine a threshold amount of time, and output the message to the UI when an amount of time since release of an update to a previously installed agent meets or exceeds the threshold amount of time without the previously installed agent being updated.

By utilizing pre-installed packages in the VM image, the methods and systems of the present disclosure enable users to set up UI-based policies and rules for managing fleet-wide agent deployment. The UI-based policies and rules concurrently lower the technical proficiency required of the user to manage the fleet while also raising user awareness of the need to install agents before problems begin to occur. The system may also enable control of the policies via an application program interface API, command line tool and packages for infrastructure automation providers to enable automated management of the policies in addition to or as an alternative to the user interface control

### Example Systems

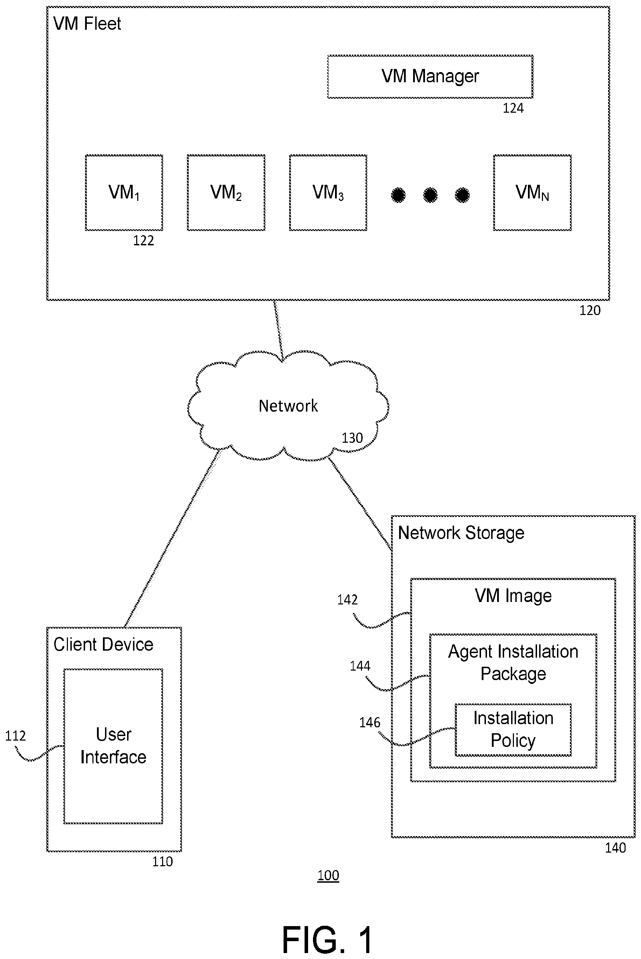

Fig. 1 is a block diagram illustrating an example system 100 including a client device 110 and a fleet of virtual machines (VMs) 120 connected through a network 130.

The client device 110 may include a processor and memory with any one or combination of data and instructions, whereby data included in the memory may be analyzed or otherwise processed by the processor based on the instructions. The client device may send and receive data over the network 130. Additionally, the client device 110 includes a user interface 112. The user interface 112 may be configured to communicate received data to a user of the client device 110, and to receive user inputs from the user. For instance, the user interface may include a screen, speaker, keys, buttons, a touch sensitive area, a camera, a microphone, or other known peripherals, or any combination of the foregoing, for providing output to the user and receiving inputs from the user. While only one client device is shown, it should be understood that any number of client devices may communicate over the network 130.

The VMs 122 of the VM fleet 120 may be configured execute one or more tasks on behalf of a client, such as a user of the client device 110. The fleet 120 may further include a manager 124 configured to manage the VMs 122 included in the fleet 120 based on instructions. The manager 124 may include memory including data and instructions, such as data about the VMs 122 and one or more routines for controlling management of the VMs 122, and one or more processors for processing the data and executing the instructions included in the manager 124. The memory and processors may belong to a single hardware device or to multiple devices, such as in a distributed network architecture. Management of the VMs may include creating the VMs, assigning or reassigning tasks to the VMs, monitoring health of the VMs, and so on.

The system 100 is further illustrated in Fig. 1 as including network storage 140 for storing information that may be utilized by the client device 110, the VM fleet 120, or both. In Fig. 1, the network storage is shown as a separate block, although the storage may include memory of the client device 110, memory of the VM manager 122, memory that is separate from both the client device 110 and the VM manager, or any combination thereof.

The network storage 140 may include a VM image 142 from which the VMs 122 of the VM fleet 120 may be created. The VM image 142 may include parameters and policies dictating operation of the VM 122 created from the image. The VM image 142 may also include software, or a listing of software, to be installed on the VM 122 created from the image. For instance, the software may include one or more installation packages 144 for installing VM agents. VM agents may be configured to do any one or combination of monitoring metrics of the created VM, monitoring system metrics, monitoring metrics of applications including third-party applications, or other known agent functions or operations. For instance, the agents may be observability agents to monitor health of the infrastructure, applications, or both. For further instance, the agents may be security agents to monitor security of the infrastructure, applications, or both. Additionally, VM agents may include daemons or other VM services that may be installed to selected VMs. The installation package 144 may itself include an installation policy 146 for controlling installation of the agent, such as whether the agent should be installed upon creation of the VM from the VM image 142, or whether a user should be notified about the possibility of installing the agent. In effect, the installation package 144 may itself be an agent that is automatically installed on the VM during instantiation.

In operation, the VM manager 124 may be configured to manage installation of the agent based on the instructions of the installation package 144, including the installation policy 146. The VM manager 124 may be configured to both set the installation policy 146 at selected VMs 122 of the VM fleet 120, and check for compliance with the installation policy 146. Checking for compliance with the installation policy may itself include both instructions for checking whether the agent is properly installed at each selected VM for installation and for bringing any non-compliant VMs into compliance. In some instances, bringing a VM into compliance may involve re-creating the VM at the same or different location, reinstalling the agent on the previously created VM, setting a configuration at the VM to ensure installation of the agent, and so on.

### Example Methods

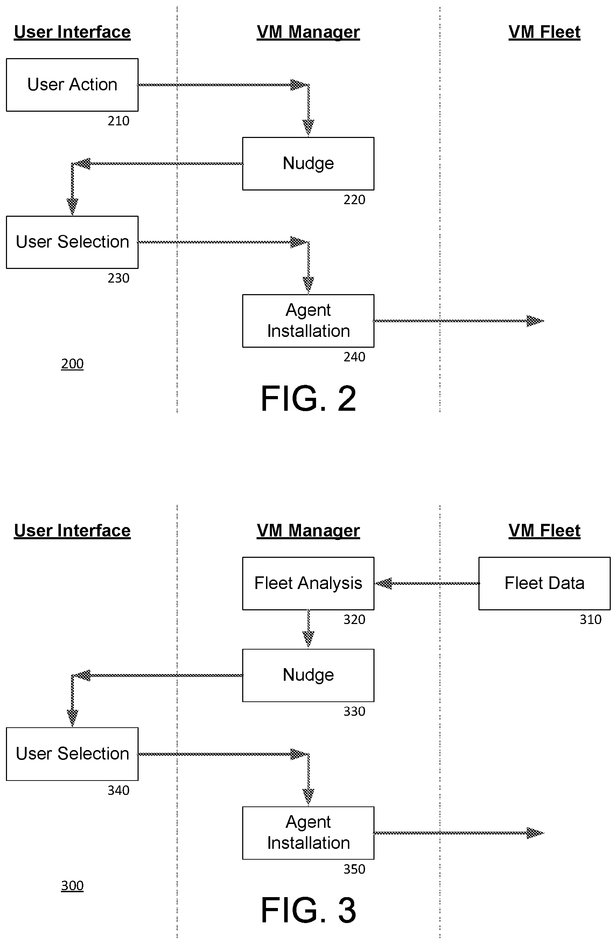

Figs. 2 and 3 are a flow diagrams illustrating example routines 200, 300 for installing an agent at one or more VMs of a VM fleet. Each of the routines 200, 300 are similar in that they result in installation of the agent at the VM fleet based on a user instruction. The routines differ in that the installation policies of each routine are triggered differently. Each of the routines may be implemented in a distributed network such as the system 100 of Fig. 1.

In the example routine 200 of Fig. 2, operations begin at block 210, in which a user action is entered. The user action may be entered through the user interface of a client device, such as the client device 110 of system 100 shown in Fig. 1. In some examples, the user action may be indicative of a need to install the agent at one or more VMs of the VM fleet. For instance, the user action may be an instruction to create a new VM, whereby the new VM may be created without the agent if the user is not advised to install the agent. In other examples, the user action may be indicative of the user's interest in installing the agent. For instance, the user action may be an instruction to install the agent at a different VM of the VM fleet, thereby indicating the user's interest on installing the VM and making it a relatively good time to suggest to the user to install the agent at other VMs of the fleet.

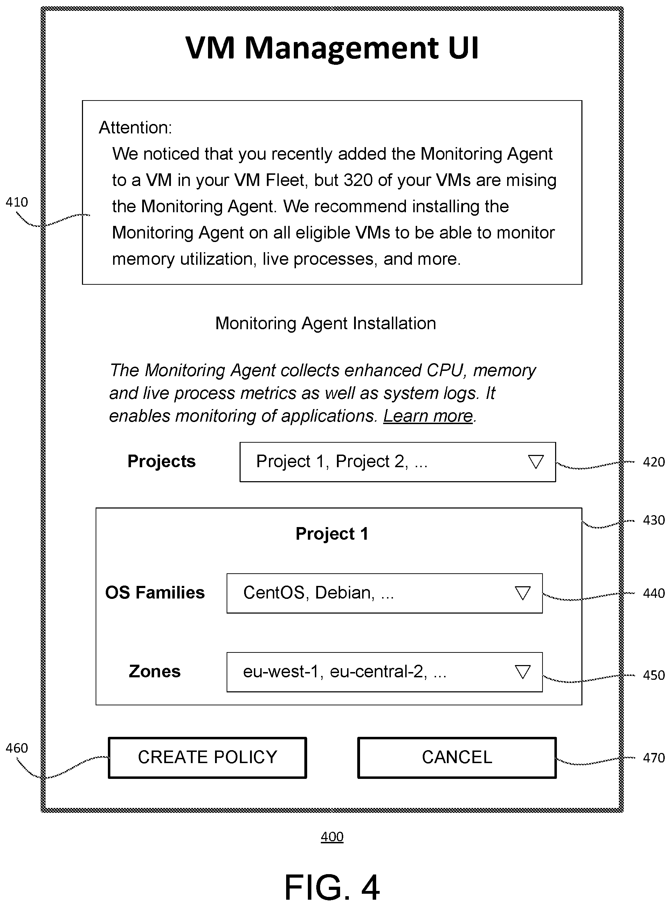

The VM manager may detect the user action at block 210. In response to detection of the user action, operations may continue at block 220 with the VM manager transmitting a nudge to the user. The nudge may be a message to the user advising the user of the need to install the agent at one or more VMs of the fleet. The message may be provided to the user in the user interface of the client device. Fig. 4 illustrates an example user interface 400 including an example message 410. The example message 410 indicates the reason for the nudge - in this case it in response to the user recently adding a monitoring agent to a VM in the VM fleet. The example message 410 also indicates that there are other VMs included in the VM fleet at which the agent has not been installed. The example message 410 may further indicate the number of VMs at which the agent is not installed. Finally, the example message 410 may provide a suggestion to the user to install the agent on the remaining eligible VMs, and may provide a reason for doing so, such as in the case of the Monitoring Agent, to better monitor memory utilization, live processes and more.

In another example, the message may indicate costs of installing the agent at the selected VMs. The costs may be determined based on predetermined criteria, information provided from the VM manager, or both. The projected costs may be useful for informing a user whether it is desirable to proceed with the suggested installation of agents, or may inform the user's selection of at which VMs to select for installation of the agent.

Returning to Fig. 2, at block 230, a user selection may be received by the VM manager in response to the nudge. The user selection may be based on an input by the user at the user interface of the client device, and may indicate a selection of one or more VMs of the VM fleet at which the user would like to install the agent as suggested in the nudge 220. In some examples, the user selection may identify selected VMs according to one or more parameters or criteria. For example, the VMs may be selected according to a particular project of the user, whereby only VMs assigned to the selected project of the user are selected for installation of the agent. For further example, the VMs may be selected according to a particular operating system of the VM, whereby only VMs running a particular OS are selected for installation of the agent. In yet another example, the VMs may be selected according to a particular zone or region, whereby the agent may be installed at only the VMs in a selected zone or region. Any one or combination of criteria may be included in the user selection. Some example criteria are shown in the user interface 400 of Fig. 4.

In the example of Fig. 4, each of the criteria is represented by a dropdown selection table, whereby a user may select a particular table and then select one or more choices from the table. A project selection table 420 is provided to enable user selection from among a plurality of projects, an OS family table 430 for selecting from among a number of OSs, and a zone table 440 for selecting from among a number of zones in which the user's VMs are located. However, other tables presenting other criteria may be provided in other example user interfaces. Also, in the example of Fig. 4, the OS table 430 and zone table 440 are shown as being nested within the project table 420, such that different OS and zone selections can be made for each respective project of the user. However, in other examples, the selection tables may be nested differently, or not nested at all.

Also shown in the user interface 400 of Fig. 4 are a "Create Policy" button 460 and "Cancel" button 470 which the user may select in order to decide whether or not, respectively, to send the selection of projects, OSs, and zones to the VM manager for initiating the installation of agents. For instance, in Fig. 2, the user selection block 230 may correspond to the user selecting the "Create Policy" 460 button from the user interface 400 of the client device, thereby pushing the user selection to the VM manager.

Continuing at block 240 to Fig. 2, after the VM manager receives the user selection, the VM manager may initiate installation of the agent at the selected VMs. In some examples, installing the VM agent may involve immediately installing the VM agent at every selected VM. However, in other examples, the number of VMs selected for installation may be too large to allow for immediate agent installation. Additionally, in some examples, agent installation may have a lower priority then other tasks to be performed, such as creating a new VM. Therefore, in some examples, installation of the agent for at least some of the VMs may be delayed until a predetermined time after the current time.

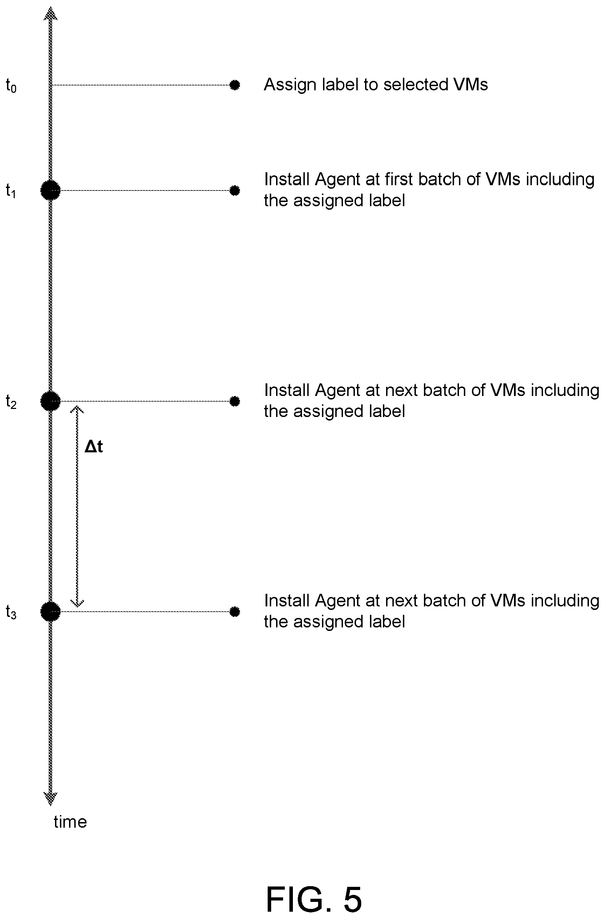

Fig. 5 is a chart illustrating one example method for delaying installation of the agent at the selected VMs. In the example method of Fig. 5, at a first time t₀, the VM manager may assign a label to each of the selected VMs indicated in the user selection. The respective labels may be stored at the selected VMs so that the VMs may be analyzed at a later time for compliance with the installation policy of the agent. Next, at time t₁, a first batch of VMs may be analyzed for compliance with the agent installation policy, and the VM manager may initiate action to rectify any VM found to not be in compliance. For instance, any VM included in the first batch that includes the assigned label but does not have the agent installed can be designated for installation of the agent at time t₁. Next, at time t₂, a second batch of VMs may be analyzed like the first batch of VMs at time t1, and any of the second batch of VMs having the assigned label and missing the agent can have the agent installed at time t₂. The same process may repeat for a third batch of VMs at time t3, and so on at future times for additional batches of VMs. In this manner, the agent may be installed onto each of the selected VMs in an asynchronous and staggered fashion, and further the installation may be performed in the background instead of as part of a VM creation process. The use of labels for queuing VMs for installation of the agent is especially advantageous for streamlining widespread installation of the agent across several VMs, and even across multiple projects, OS families, regions, zones, or a combination thereof.

In the example of Fig. 5, each of times t₁, t₂ and t₃ may be separated by a predetermined fixed duration Δt, such that the VMs are checked at regular intervals to see whether agents need to be installed at the VMs. The duration may depend on available resources and the number of VMs potentially requiring service. In one example, the duration may range from between 5 minutes to about an hour. For instance, the duration may be about 10 minutes, about 15 minutes, about 20 minutes, and so on.

As can be seen in Fig. 5, time t₀ does not occur at one of the fixed times t₁, t₂, t₃. Therefore, none of the agents are immediately installed at the selected VMs at time t₀. However, if the time t₀ were to coincide with one of t₁, t₂, or t₃, then installation of the VMs could be effectively immediate for at least some of the selected VMs. Nonetheless, VM creation and agent installation may be separated as different processes, in order to avoid decreasing successful VM creation rates, and in order to avoid increasing the time for successful VM creation.

In one example, a different batch of VMs may be checked at each fixed time. In another example, all VMs may be checked at a given fixed time up until a threshold amount of VMs needing service are discovered, and then remaining VMs may be checked at a next fixed time. In either case, the VMs are updated asynchronously at regular intervals over time, and avoid delaying other VM-related processes such as creating new VM instances.

Returning to Fig. 3, the routine 300 of Fig. 3 begins its operations at block 310, in which data about the VM fleet is collected by the VM manager. The data may be collected in response to a request from the VM manager, which may be initiated at regular intervals or in response to a different input, such as a user action or a change at the VM fleet. At block 320, the VM fleet data is analyzed by the VM manager in order to determine whether or not to send a nudge to the user. For instance, the VM manager assesses a number of VMs in the VM fleet that do not have a particular agent installed thereon, and if the number of VMs meets or exceeds a predetermined threshold value, such as an absolute number or percentage, then the VM manager determines to send the nudge. For further instance, the VM manager assesses an amount of time since the agent has been installed at any of the VMs in the VM fleet, and if the amount of time is above a certain maximum threshold amount of time, below a certain minimum threshold amount of time, or either one, then the VM manager determines to send the nudge. The maximum threshold value may correspond to a longest acceptable amount of time for a user to forego maintaining the VM fleet, whereas the minimum amount of time may correspond to an amount of time where a user's recent installation of an agent at one VM may influence the user's willingness to install the agent at other VMs. In another instance, the amount of time may be evaluated on a VM-by-VM basis, whereby an amount of time that a given VM goes without the agent installed may prompt a nudge for that given VM.

At block, 330, the VM manager sends the nudge to the user. The nudge may be similar to the nudge described in connection with block 220 of Fig. 2. In the case of block 330 of Fig. 3, the message included with the nudge may include the fleet analysis from block 320, such that the user may be informed of a current status of the VM fleet vis-à-vis the agent to be installed. User selection at block 340 and agent installation by the VM manager at block 350 may correspond to the operations described in connection with blocks 230 and 240 of Fig. 2, respectively. The operations of Fig. 3 allow for nudges to be selectively pushed from the VM manager to the client device based on a status of the VM fleet, thus providing useful information to inform the user whether it is necessary to install the agents.

The examples of Figs. 2 and 3 generally describe the VM manager transmitting a nudge to a client device in response to information received at the VM manager, such as a user action or analysis of VM fleet data. However, in other examples, the nudge may be transmitted without being based on information, such as sending nudges at regular intervals. For instance, a nudge may be sent every week or every other week. These regular reminders may help to condition users to proactively install agents at the VMs instead of waiting for a problem to occur first.

The above examples generally describe installation of an agent at one or more VMs of a VM fleet. It should be recognized that "installation" of an agent is not limited to adding the agent to a VM that has no version of the agent. To the contrary, installing the agent may also include updating a version of an agent already existing at the VM, whereby the new or up-to-date version of the agent is installed there. In this manner, checking whether an agent is installed at the VMs may involve either one or both of checking for any version of the agent and checking whether the installed version is up to date. Additionally, messages to the user may specify whether the VMs in the VM fleet are missing the agent altogether, or just missing the most up to date version of the agent. In a similar vein, asynchronous installation of the agent at multiple VMs may involve either one or both of newly installing the agent at a VM or updating a version of the agent at the VM. The above examples generally describe the interchangeable application of the present disclosure between newly installing agents and updating agents at a VM, and are not intended to limit the applicability of when or how an updated version of an agent can be installed.

Additionally, it should be recognized that the underlying principles of the present disclosure may be extended to installation of any software package at a select one or more VMs of a VM fleet. The underlying advantages of the present disclosure, such as providing users with a user interface-based means of controlling fleetwide installation policies, and streamlining fleetwide installation activities without hampering higher priority activities, may be realized for any type of installation that occurs at selected VMs based on user permissions.

Furthermore, the above examples generally describe setting installation policies for pre-existing VMs. However, the same underlying principles and techniques may also be used to set installation policies for VM instances created in the future. For instance, the nudge from the VM manager may ask a user whether the user wants to set a new policy to default install the agent upon instantiation at VM instances created in the future. The user selection may then contain an instruction to update the installation policy so that all newly created VM instances to include the agent. In response The VM manager may then update the installation policy for the agent so that future VMs created from the VM image in the network storage are default installed with the agent. Similarly, the policy may be changed to allow by default the updating of agents with new versions that are released in the future.

Like with installation policies for existing VMs and existing versions of an agent, default installation policies for future VMs and future versions of an agent may be set according to certain criteria, such as a project to which the future VM is assigned, an OS zone, or region of the future VM, and so on.

The above described principles for setting agent installation policies can similarly be applied to uninstallation. For instance, if a user wishes to uninstall an agent at several VMs of the VM fleet, the VM manager may be capable of processing a user selection of VMs for removal of the agent, or for rolling back the agent to a previous version. In this manner, the uninstallation or rollback of the agent can be streamlined on a fleetwide basis using the same or similar techniques as described herein.

Altogether, the techniques and routines of the present disclosure provide several advantages to VM clients. The automated nudges educate users as to the importance of installing monitoring and security agents, and further condition the users to recognize events that may necessitate an update to installation policies at the VM fleet. Additionally, because the streamlined instructions are passed through the VM manager, the user interface for the VM manager may be leveraged to communicate with the user, instead of having to rely on more complicated and technical means of network communication such as secure shell (SSH) protocol and command-line tools. Altogether, the techniques allow for fleetwide policies to be implemented with only a few button clicks from an intuitive interface.

Although the technology herein has been described with reference to particular embodiments, it is to be understood that these embodiments are merely illustrative of the principles and applications of the present technology. It is therefore to be understood that numerous modifications may be made to the illustrative embodiments and that other arrangements may be devised without departing from the scope of the present technology as defined by the appended claims.

Most of the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. As an example, the preceding operations do not have to be performed in the precise order described above. Rather, various steps can be handled in a different order, such as reversed, or simultaneously. Steps can also be omitted unless otherwise stated. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for installing an agent at one or more virtual machines, VMs, (122) of a VM fleet (120), the method comprising:
analyzing (320), by one or more processors, VM fleet data of the VM fleet;
determining (320), by the one or more processors, whether or not to transmit a message (410) to a user interface (112, 400) based on the analysis of the VM fleet data, the message requesting a user input for setting a policy for installation of the agent at the VM fleet, wherein the analysis of the VM fleet data includes at least one of:
(i) determining a number of VMs in the VM fleet that do not have the agent installed or the agent is not up to date thereon, determining to transmit the message if the number of VMs meets or exceeds a predetermined threshold value, and determining not to transmit the message if the number of VMs is less than the predetermined threshold value; or
(ii) determining an amount of time since the agent has been installed at any of the VMs in the VM fleet, determining to transmit the message if the amount of time is above a first threshold amount of time, and determining not to transmit the message if the amount of time is below the first threshold amount of time; or
(iii) determining the amount of time since the agent has been installed at any of the VMs in the VM fleet, determining to transmit the message if the amount of time is below a second threshold amount of time, and determining not to transmit the message if the amount of time is above the second threshold amount of time;
in response to the determination to transmit the message, transmitting (220, 330), by the one or more processors, the message to the user interface;
receiving (230), by the one or more processors, the user input for setting the policy for installation of the agent at the VM fleet;
setting, by the one or more processors, the policy for installation of the agent at the VM fleet based on the user input; and
installing (240, 350), by the one or more processors, the agent at the one or more VMs according to the policy.

2. The method of claim 1, wherein the message includes an indication of a plurality of the VMs included in a VM image, and wherein the user input includes a selection of VMs from the plurality of VMs indicated in the message, wherein the policy is set for the selection of VMs based on the user input.

3. The method of claim 2, wherein the selection of VMs specifies at least one of a project, an operating system, OS, a distributed network region or a distributed network zone at which the policy is set.

4. The method of claim 1, wherein the method further comprises:
detecting, by the one or more processors, a user action; and
transmitting, by the one or more processors, the message to the user interface in response to the user action.

5. The method of claim 4, wherein the user action is:
a user instruction to install the agent at a VM of the VM fleet; or
a user instruction to create a new VM at the VM fleet.

6. The method of claim 1, wherein transmitting the message to the user interface is performed at regular intervals.

7. The method of claim 1, wherein installing the agent at the one or more VMs comprises assigning, by the one or more processors, a label to a plurality of VMs, the label indicating to install or update the agent at the plurality of VMs.

8. The method of claim 7, wherein installing the agent at the plurality of VMs is performed asynchronously at regular intervals, wherein an order in which the agent is installed at the plurality of VMs is based on the assigned labels.

9. The method of claim 1, wherein the agent is an operational agent configured to collect telemetry data from the one or more VMs of the VM fleet.

10. A system for installing an agent at one or more virtual machines, VMs, of a VM fleet comprising:
one or more processors; and
memory in communication with the one or more processors, wherein the memory contains instructions configured to cause the one or more processors to execute steps of the method according to any one of the preceding claims.

## Patentansprüche

1. Verfahren zur Installation eines Agenten auf einer oder mehreren virtuellen Maschinen, VMs, (122) einer VM-Flotte (120), wobei das Verfahren Folgendes umfasst:
Analysieren (320) von VM-Flottendaten der VM-Flotte durch einen oder mehrere Prozessoren;
Bestimmen (320) durch den einen oder die mehreren Prozessoren, ob eine Nachricht (410) an eine Benutzeroberfläche (112, 400) auf der Grundlage der Analyse der VM-Flottendaten zu übertragen ist oder nicht, wobei die Nachricht eine Benutzereingabe zum Festlegen einer Richtlinie für die Installation des Agenten auf der VM-Flotte anfordert, wobei die Analyse der VM-Flottendaten mindestens eines der Folgenden umfasst:
(i) Bestimmen einer Anzahl von VMs in der VM-Flotte, auf denen der Agent nicht installiert ist oder der Agent nicht auf dem neuesten Stand ist, Bestimmen, die Nachricht zu übertragen, wenn die Anzahl der VMs einen vorbestimmten Schwellenwert erreicht oder überschreitet, und Bestimmen, die Nachricht nicht zu übertragen, wenn die Anzahl der VMs unter dem vorbestimmten Schwellenwert liegt; oder
(ii) Bestimmen einer Zeitdauer seit der Installation des Agenten auf einer der VMs in der VM-Flotte, Bestimmen, die Nachricht zu übertragen, wenn die Zeitdauer über einer ersten Schwellenzeitdauer liegt, und Bestimmen, die Nachricht nicht zu übertragen, wenn die Zeitdauer unter der ersten Schwellenzeitdauer liegt; oder
(iii) Bestimmen der Zeitdauer seit der Installation des Agenten auf einer der VMs in der VM-Flotte, Bestimmen, die Nachricht zu übertragen, wenn die Zeitdauer unter einer zweiten Schwellenzeitdauer liegt, und Bestimmen, die Nachricht nicht zu übertragen, wenn die Zeitdauer über der zweiten Schwellenzeitdauer liegt;
als Reaktion auf die Bestimmung, die Nachricht zu übertragen, Übertragen (220, 330) der Nachricht durch den einen oder die mehreren Prozessoren an die Benutzeroberfläche;
Empfangen (230) der Benutzereingabe zum Festlegen der Richtlinie für die Installation des Agenten auf der VM-Flotte durch den einen oder die mehreren Prozessoren;
Festlegen der Richtlinie für die Installation des Agenten auf der VM-Flotte auf der Grundlage der Benutzereingabe durch den einen oder die mehreren Prozessoren; und
Installieren (240, 350) des Agenten auf der einen oder den mehreren VMs gemäß der Richtlinie durch den einen oder die mehreren Prozessoren.

2. Verfahren nach Anspruch 1, wobei die Nachricht eine Angabe einer Vielzahl von in einem VM-Abbild enthaltenen VMs umfasst, und wobei die Benutzereingabe eine Auswahl von VMs aus der in der Nachricht angegebenen Vielzahl von VMs umfasst, wobei die Richtlinie für die Auswahl von VMs auf der Grundlage der Benutzereingabe festgelegt wird.

3. Verfahren nach Anspruch 2, wobei die Auswahl von VMs mindestens eines der Folgenden angibt: ein Projekt, ein Betriebssystem, OS, eine verteilte Netzwerkregion oder eine verteilte Netzwerkzone, für die die Richtlinie festgelegt ist.

4. Verfahren nach Anspruch 1, wobei das Verfahren ferner Folgendes umfasst:
Erkennen einer Benutzeraktion durch den einen oder die mehreren Prozessoren; und
Übertragen der Nachricht an die Benutzeroberfläche als Reaktion auf die Benutzeraktion durch den einen oder die mehreren Prozessoren.

5. Verfahren nach Anspruch 4, wobei die Benutzeraktion Folgendes ist:
eine Benutzeranweisung zum Installieren des Agenten auf einer VM der VM-Flotte; oder
eine Benutzeranweisung zum Erstellen einer neuen VM in der VM-Flotte.

6. Verfahren nach Anspruch 1, wobei das Übertragen der Nachricht an die Benutzeroberfläche in regelmäßigen Abständen erfolgt.

7. Verfahren nach Anspruch 1, wobei das Installieren des Agenten auf der einen oder den mehreren VMs das Zuweisen einer Kennzeichnung zu einer Vielzahl von VMs durch den einen oder die mehreren Prozessoren umfasst, wobei die Kennzeichnung angibt, den Agenten auf der Vielzahl von VMs zu installieren oder zu aktualisieren.

8. Verfahren nach Anspruch 7, wobei das Installieren des Agenten auf der Vielzahl von VMs asynchron in regelmäßigen Abständen erfolgt, wobei eine Reihenfolge, in der der Agent auf der Vielzahl von VMs installiert wird, auf den zugewiesenen Kennzeichnungen basiert.

9. Verfahren nach Anspruch 1, wobei es sich bei dem Agenten um einen operationellen Agenten handelt, der dazu konfiguriert ist, Telemetriedaten von der einen oder den mehreren VMs der VM-Flotte zu sammeln.

10. System zum Installieren eines Agenten auf einer oder mehreren virtuellen Maschinen, VMs, einer VM-Flotte, umfassend:
einen oder mehrere Prozessoren; und
einen Speicher in Kommunikation mit dem einen oder den mehreren Prozessoren, wobei der Speicher Anweisungen enthält, die dazu konfiguriert sind, den einen oder die mehreren Prozessoren zu veranlassen, Schritte des Verfahrens nach einem der vorhergehenden Ansprüche auszuführen.

## Revendications

1. Procédé d'installation d'un agent sur une ou plusieurs machines virtuelles, MV, (122) d'une flotte de MV (120), le procédé comprenant :
l'analyse (320), par un ou plusieurs processeurs, de données de flotte de MV de la flotte de MV ;
le fait de déterminer (320), par les un ou plusieurs processeurs, s'il convient ou non de transmettre un message (410) à une interface utilisateur (112, 400) sur la base de l'analyse des données de flotte de MV, le message demandant à une entrée d'utilisateur de définir une politique d'installation de l'agent sur la flotte de MV, dans lequel l'analyse des données de flotte de MV comporte au moins un des éléments suivants :
(i) la détermination d'un nombre de MV dans la flotte de MV sur lesquelles l'agent n'est pas installé ou n'est pas à jour, la détermination de transmettre le message si le nombre de MV atteint ou dépasse une valeur seuil prédéterminée, et la détermination de ne pas transmettre le message si le nombre de MV est inférieur à la valeur seuil prédéterminée ; ou
(ii) la détermination d'un temps écoulé depuis l'installation de l'agent sur l'une quelconque des MV de la flotte de MV, la détermination de transmettre le message si ce temps est supérieur à un premier temps seuil, et la détermination de ne pas transmettre le message si ce temps est inférieur au premier temps seuil ; ou
(iii) la détermination du temps écoulé depuis l'installation de l'agent sur l'une quelconque des MV de la flotte de MV, la détermination de transmettre le message si ce temps est inférieur à un second temps seuil, et la détermination de ne pas transmettre le message si ce temps est supérieur au second temps seuil ;
en réponse à la détermination de transmettre le message, la transmission (220, 330), par les un ou plusieurs processeurs, du message à l'interface utilisateur ;
la réception (230), par les un ou plusieurs processeurs, de l'entrée d'utilisateur pour définir la politique d'installation de l'agent sur la flotte de MV ;
la définition, par les un ou plusieurs processeurs, de la politique d'installation de l'agent sur la flotte de MV sur la base de l'entrée d'utilisateur ; et
l'installation (240, 350), par les un ou plusieurs processeurs, de l'agent sur les une ou plusieurs MV selon la politique.

2. Procédé selon la revendication 1, dans lequel le message comporte une indication d'une pluralité de MV incluses dans une image de MV, et dans lequel l'entrée d'utilisateur comporte une sélection de MV parmi la pluralité de MV indiquées dans le message, dans lequel la politique est définie pour la sélection des MV sur la base de l'entrée d'utilisateur.

3. Procédé selon la revendication 2, dans lequel la sélection de MV spécifie au moins un d'un projet, d'un système d'exploitation, OS, d'une région de réseau distribué ou d'une zone de réseau distribuée sur laquelle la politique est définie.

4. Procédé selon la revendication 1, dans lequel le procédé comprend également :
la détection, par les un ou plusieurs processeurs, d'une action d'utilisateur ; et
la transmission, par les un ou plusieurs processeurs, du message à l'interface utilisateur en réponse à l'action d'utilisateur.

5. Procédé selon la revendication 4, dans lequel l'action d'utilisateur est :
une instruction d'utilisateur pour installer l'agent sur une MV de la flotte de MV ; ou
une instructions d'utilisateur pour créer une nouvelle MV dans la flotte de MV.

6. Procédé selon la revendication 1, dans lequel la transmission du message à l'interface utilisateur est réalisée à intervalles réguliers.

7. Procédé selon la revendication 1, dans lequel l'installation de l'agent sur les une ou plusieurs MV comprend l'attribution, par les un ou plusieurs processeurs, d'une étiquette à une pluralité de MV, l'étiquette indiquant d'installer ou de mettre à jour l'agent sur la pluralité de MV.

8. Procédé selon la revendication 7, dans lequel l'installation de l'agent sur la pluralité de MV est réalisée de manière asynchrone à intervalles réguliers, dans lequel l'ordre dans lequel l'agent est installé sur la pluralité de MV est basé sur les étiquettes attribuées.

9. Procédé selon la revendication 1, dans lequel l'agent est un agent opérationnel configuré pour collecter des données de télémétrie à partir des une ou plusieurs MV de la flotte de MV.

10. Système d'installation d'un agent sur une ou plusieurs machines virtuelles, MV, d'une flotte de MV, comprenant :
un ou plusieurs processeurs ; et
une mémoire en communication avec les un ou plusieurs processeurs, dans lequel la mémoire contient des instructions configurées pour amener les un ou plusieurs processeurs à exécuter des étapes du procédé selon l'une quelconque des revendications précédentes.
